# EUROPEAN PATENT APPLICATION

(11) **EP 4 583 079 A1**
(43) Date of publication of application: **09.07.2025**
(21) Application number: 24193966.9
(22) Date of filing: 09.08.2024
(51) Int. Cl.: G09B 9/00, G06T 19/00, G06T 19/20

(54) **XR TRAINING SERVER**

(30) Priority: 02.01.2024 KR 20240000474
(71) Applicant: INTERACT Co., Ltd, Incheon (KR)
(72) Inventor: KWON, Nam Hyeok, Incheon (KR); KIM, Sung Tae, Suwon-si, Gyeonggi-do (KR)
(74) Representative: Jung, Minkyu

(57) **Abstract**

An extended reality (XR) training server comprising: a preprocessor configured to receive a graphic resource from an external database and convert the received graphic resource to generate template data; a content producer configured to produce content for XR training by using the template data; and an interaction part configured to display XR training data to a user by using the template data and the content, wherein the template data includes data obtained from the graphic resource that is changed to be usable for generating the content, wherein the content includes at least one of a map for XR training and a scenario corresponding to the map.

## Description

### TECHNICAL FIELD

The present disclosure relates to an extended reality (XR) training server.

More particularly, the present disclosure relates to an XR training server capable of generating and displaying XR training data for training like real-world situations.

### BACKGROUND

Virtual reality (VR) technology provides real-world objects and backgrounds as computer graphics (CG) images only, augmented reality (AR) technology provides virtual CG images on top of images of real objects, and mixed realty (MR) technology is a computer graphics technique that provides images resulting from mixing and combining virtual objects with the real world. While VR is a technology that allows a user to experience a new reality based on 360-degree images, AR displays information and content on real objects through computer graphics. Although AR and VR are separate, these two technologies are co-evolving while complementing each other's shortcomings. However, at current stage, the difference is clearly visible. VR requires a head mounted display (HMD) that covers the whole eyes, and AR may be represented with glasses such as Google Glass.

Here, a device equipped with AR technology may recognize real spaces and objects in three dimensions through a camera and display real spaces and virtual objects on the screen. However, according to the related art, a virtual object may be moved based only on a user touch recognized on the screen.

Additionally, VR is basically based on providing visual and auditory stimulation to the user, and has limitations in stimulating other senses. In the context of training and entertainment, there may be not many cases where olfactory and taste stimulation are required, but cases where tactile stimulation is required occur relatively frequently. For example, when an object or structure is visually simulated in VR, the user may try to hold the object with their hands or lean on the structure, but since the object or structure does not exist in the actual environment, the user may become confused or an accident such as falling may occur. In particular, when training is performed through VR, interacting with surrounding structures may be a major part of the training. For example, when conducting terrorism suppression training using VR, it may be a large part of the training for trainees to lean behind structures such as walls and use the structures as a means of concealment or defense. In such a case, if VR is provided only as audio-visual stimulation, trainees cannot interact with the structures, which inevitably reduces the completeness of the training.

Extended reality (XR) is a term that encompasses the aforementioned VR, AR, and MR technologies.

XR freely chooses to use VR and AR technologies individually or in combination to create an extended reality. HoloLens developed by Microsoft (MS) is a glasses-shaped device, but it can be seen as a form of XR in that it displays an optimized 3D hologram by identifying information about real spaces and objects. As XR technology evolves, glasses are normally transparent, but when AR is needed, information is displayed on the glasses. When VR is needed, the glasses become opaque, making it possible to display information entirely across the field of view.

XR is expected to be applied to various fields, including education, healthcare, and manufacturing. To realize XR, high-performance computing power and graphics processing performance are important to display large amounts of real-time 3D images. Display technology should also be developed, and technology for effectively transmitting large amounts of data with ultra-low latency, such as 5^{th} generation (5G) mobile communication, is also a prerequisite.

As such, there are attempts to apply XR training data to various industries.

### SUMMARY

An object of the present disclosure is to provide an XR training server that enable virtual training by using XR training data.

In addition, an object of the present disclosure is to provide an XR training server that may generate XR training data to obtain realistic training effects.

The objects of the present disclosure are not limited to those mentioned above, and other objects and advantages of the present disclosure that are not mentioned may be understood by the following description and will be more clearly understood by embodiments of the present disclosure. Further, it will be readily apparent that the objects and advantages of the present disclosure can be realized by the means and combinations thereof indicated in the patent claims.

According to some aspects of the disclosure, an extended reality (XR) training server comprises, a preprocessor configured to receive a graphic resource from an external database and convert the received graphic resource to generate template data,
a content producer configured to produce content for XR training by using the template data, and an interaction part configured to display XR training data to a user by using the template data and the content, wherein the template data includes data obtained from the graphic resource that is changed to be usable for generating the content, wherein the content includes at least one of a map for XR training and a scenario corresponding to the map.

According to some aspects, the preprocessor is configured to: generate a changed graphic by performing at least one of standardization, format conversion, and size conversion on the graphic resource; and generate the template data by assigning attribute information to the changed graphic.

According to some aspects, the template data includes at least one of an object template related to an object constituting the map, an avatar template related to an avatar whose behavior is controlled by a user wearing an XR training device, a weapon template related to a weapon carried by the avatar, and a transportation means template related to a transportation means that is capable of carrying the avatar.

According to some aspects, when generating at least one of the object template, the avatar template, the weapon template, and the transportation means template, the preprocessor is configured to assign, as the attribute information, at least one of collision information, ignition information, sound information, animation information, size information, mounting position information, effect information, model information, and boarding information.

According to some aspects, the content producer includes a map production module that generates the map by using the template data, and a scenario production module that generates the scenario by using the template data.

According to some aspects, the map production module is configured to generate the map implemented in three dimensions by placing the template data in a predefined space.

According to some aspects, the scenario production module is configured to generate, as the scenario, at least one mission that is performable by an avatar whose behavior is controlled by a user wearing an XR training device, and at least one event that occurs in the map.

According to some aspects, the mission includes at least one of a state condition being a condition that the avatar has to achieve to complete the mission, a time condition, and an action condition; the state condition includes a condition regarding a state of the avatar, a condition regarding a state of a non-player character (NPC) present in the map, and a condition regarding a state of an object constituting the map; the time condition includes a condition regarding a total time required to perform the mission; and the action condition includes a condition regarding an action that is to be performed by the avatar before completing the mission.

According to some aspects, the event includes at least one of an occurrence condition for the event to occur and a termination condition for the event to terminate.

According to some aspects, the interaction part includes an XR training device that is wearable by a user and is configured to apply a user manipulation signal received through the XR training device to the template data and the content to reflect actual movement of the user in the XR training data.

Aspects of the disclosure are not limited to those mentioned above and other objects and advantages of the disclosure that have not been mentioned can be understood by the following description and will be more clearly understood according to embodiments of the disclosure. In addition, it will be readily understood that the objects and advantages of the disclosure can be realized by the means and combinations thereof set forth in the claims.

The XR training server according to some embodiments of the present disclosure may obtain various training effects in limited environments and spaces by using realistic XR training data.

In addition, the XR training server according to some embodiments of the present disclosure may achieve an effect of collecting various data reflecting the environment and condition of the user by generating various XR training data and performing training using the generated XR training data.

The effects that may be obtained from the present disclosure are not limited to those mentioned above, and other effects not mentioned will be clearly understood by a person skilled in the art to which the present disclosure pertains from the following description.

### BRIEF DESCRIPTION OF THE DRAWINGS

FIG. 1 is a block diagram of an XR training server according to some embodiments of the present disclosure.
FIG. 2 is a conceptual diagram illustrating the operation of the preprocessor according to some embodiments of the present disclosure.
FIG. 3 is a diagram for explaining types of template data according to some embodiments of the present disclosure.
FIGS. 4A to 4F are diagrams to explain examples of template data according to some embodiments of the present disclosure.
FIG. 5 is a detailed block diagram of the content producer according to some embodiments of the present disclosure.
FIG. 6 illustrates a map produced by the map production module according to some embodiments of the present disclosure.
FIGS. 7A and 7B are diagrams for describing missions and events included in a scenario according to some embodiments of the present disclosure.
FIG. 8A shows some examples of an XR training device, and FIG. 8B shows some examples of XR training data.

### DETAILED DESCRIPTION OF THE PREFERRED EMBODIMENTS

The terms or words used in the disclosure and the claims should not be construed as limited to their ordinary or lexical meanings. They should be construed as the meaning and concept in line with the technical idea of the disclosure based on the principle that the inventor can define the concept of terms or words in order to describe his/her own inventive concept in the best possible way. Further, since the embodiment described herein and the configurations illustrated in the drawings are merely one embodiment in which the disclosure is realized and do not represent all the technical ideas of the disclosure, it should be understood that there may be various equivalents, variations, and applicable examples that can replace them at the time of filing this application.

Although terms such as first, second, A, B, etc. used in the description and the claims may be used to describe various components, the components should not be limited by these terms. These terms are only used to differentiate one component from another. For example, a first component may be referred to as a second component, and similarly, a second component may be referred to as a first component, without departing from the scope of the disclosure. The term 'and/or' includes a combination of a plurality of related listed items or any item of the plurality of related listed items.

The terms used in the description and the claims are merely used to describe particular embodiments and are not intended to limit the disclosure. Singular forms are intended to include plural forms unless the context clearly indicates otherwise. In the application, terms such as "comprise," "comprise," "have," etc. should be understood as not precluding the possibility of existence or addition of features, numbers, steps, operations, components, parts, or combinations thereof described herein.

Unless otherwise defined, the phrases "A, B, or C," "at least one of A, B, or C," or "at least one of A, B, and C" may refer to only A, only B, only C, both A and B, both A and C, both B and C, all of A, B, and C, or any combination thereof.

Unless being defined otherwise, all terms used herein, including technical or scientific terms, have the same meaning as commonly understood by those skilled in the art to which the disclosure pertains.

Terms such as those defined in commonly used dictionaries should be construed as having a meaning consistent with the meaning in the context of the relevant art, and are not to be construed in an ideal or excessively formal sense unless explicitly defined in the application. In addition, each configuration, procedure, process, method, or the like included in each embodiment of the disclosure may be shared to the extent that they are not technically contradictory to each other.

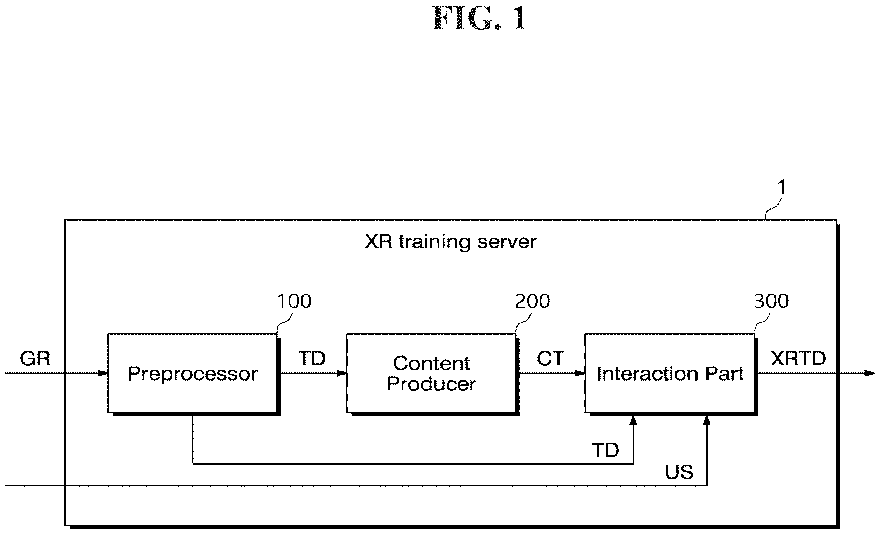

Hereinafter, a description will be given of an XR training server according to some embodiments of the present disclosure with reference to FIGS. 1 to 8B.

FIG. 1 is a block diagram of an XR training server according to some embodiments of the present disclosure.

With reference to FIG. 1, the XR training server 1 may include a preprocessor 100, a content producer 200, and an interaction part 300.

The preprocessor 100 is a tool that creates a template for producing content used for XR training.

In some examples, the preprocessor 100 may receive a graphic resource (hereinafter referred to as "GR") retrieved from an external database, and generate template data (hereinafter referred to as "TD") based on the received graphic resource GR. In other words, the preprocessor 100 may import a graphic resource GR from an external database and convert it into data usable by the content producer 200.

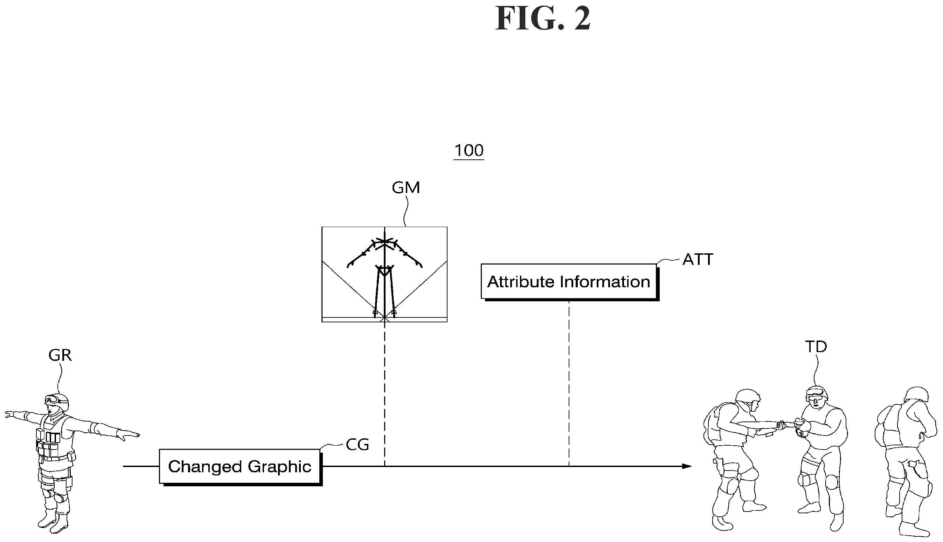

Next, with further reference to FIG. 2, the operation of the preprocessor 100 according to some embodiments of the present disclosure will be described.

FIG. 2 is a conceptual diagram illustrating the operation of the preprocessor according to some embodiments of the present disclosure.

With reference to FIG. 2, the preprocessor 100 may convert a graphic resource GR into template data TD. The graphic resource GR may include an image (2D image, 3D image), a video, a panorama, or the like, but embodiments of the present disclosure are not limited thereto.

In some examples, the preprocessor 100 may perform standardization, format conversion, and size conversion on the received graphic resource GR and assign attribute information (hereinafter referred to as "ATT") to the graphic resource GR to thereby produce template data TD.

To be specific, first, the preprocessor 100 may generate a changed graphic (hereinafter referred to as "CG") as a preprocessing task for a graphic resource GR by standardizing the graphic resource GR, converting the format of the graphic resource GR, or changing the size of the graphic resource GR. In other words, the changed graphic CG may be the result of performing at least one of standardization, format conversion, and size change on the graphic resource GR. At this time, a changed graphic CG may be stored in the form of a library.

Next, the preprocessor 100 may apply animation to a movable region of the changed graphic CG by using a guide model (hereinafter referred to as "GM"). In other words, the preprocessor 100 may apply animation effects to movable portions (e.g., arms or legs in an avatar, wheels in a vehicle) of an object included in the changed graphic CG. If an object included in the changed graphic CG does not have a movable portion (region) (e.g., floor, wall), the preprocessor 100 may not apply an animation effect. Here, the guide model GM may include known models such as Biped, CAT (Character Animation Toolkit), Rigify, Advanced Skeleton, HumanIK, and The Setup Machine, but embodiments of the present disclosure are not limited thereto.

Next, the preprocessor 100 may assign attribute information ATT to the generated changed graphic CG. For example, the preprocessor 100 may assign at least one attribute information according to the data type of the changed graphic CG and store it in the corresponding changed graphic CG. The data type of the changed graphic CG may be determined depending on the object included in the changed graphic CG. For example, data types of a changed graphic CG may include an object constituting a map, an avatar whose action is controlled by a user wearing an XR training device, a weapon carried by an avatar, a means of transportation that an avatar may ride, or the like, but embodiments of the present disclosure are not limited thereto. Here, the attribute information for changed graphics CGs assigned by the preprocessor 100 may be different according to the data types of the changed graphics CGs. For description as an example, the attribute information assigned to the object template related to an object may be partially or completely different from the attribute information assigned to the avatar template related to an avatar. However, this is only for convenience of description, and embodiments of the present disclosure are not limited thereto.

The preprocessor 100 may determine the result of applying an animation effect using a guide model GM and/or assigning attribute information ATT to the changed graphic CG to be template data TD. The determined template data TD may be stored in the form of a library.

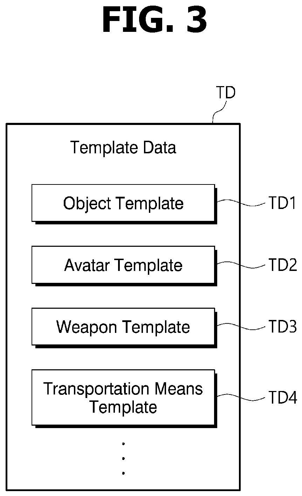

Next, a specific example of template data TD of the present disclosure will be described with reference to FIG. 3.

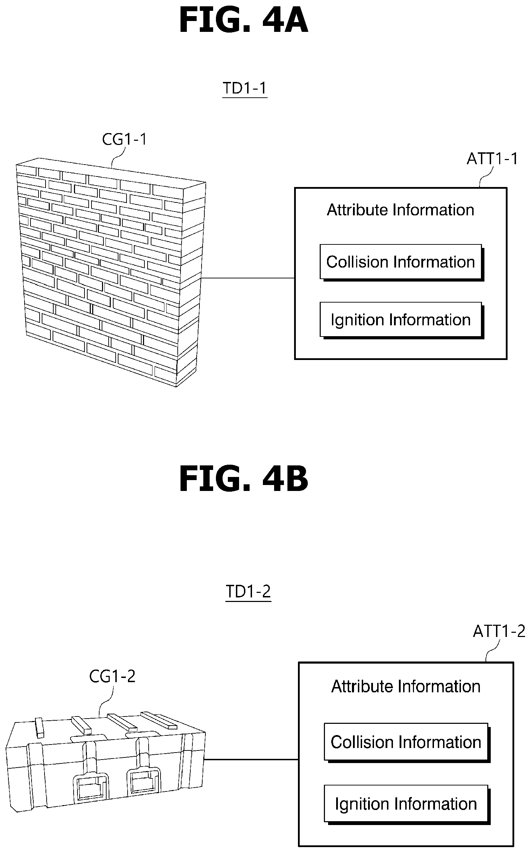

FIG. 3 is a diagram for explaining types of template data according to some embodiments of the present disclosure. FIGS. 4A to 4F are diagrams to explain examples of template data according to some embodiments of the present disclosure.

With reference to FIG. 3, the template data TD may include an object template TD1, an avatar template TD2, a weapon template TD3, and a transportation means template TD4. However, embodiments of the present disclosure are not limited thereto; one or more of object template TD1, avatar template TD2, weapon template TD3, and transportation means template TD4 may be omitted, and the template data TD may also include a separate template different from those shown in FIG. 3.

With reference to FIGS. 3 to 4F, the object template TD1 may include a template related to an object constituting a map for virtual training.

Specifically, the object template TD1 may include a wall template TD1-1, an article template TD1-2, and a floor template TD1-3.

For example with reference to FIG. 4A, the wall template TD1-1 may include a changed graphic CG1-1 of a shape representing a wall, and attribute information ATT1-1 assigned to the corresponding changed graphic CG1-1. The attribute information ATT1-1 of the wall template TD1-1 may include collision information and ignition information. Here, the collision information may include information about the collision reference location, collision size, or the like. Additionally, the ignition information may include information about presence of combustion, ignition point, combustion time, maximum temperature, combustion type (maximum flame size, smoke color, smoke amount), or the like, which is an attribute related to ignition of the wall.

For example with reference to FIG. 4B, the article template TD1-2 may include a changed graphic CG1-2 of a shape representing the article, and attribute information ATT1-2 assigned to the corresponding changed graphic CG1-2. The attribute information ATT1-2 of the article template TD1-2 may include collision information and ignition information. Here, the collision information may include information about the collision reference location, collision size, or the like. Additionally, the ignition information may include information about presence of combustion, ignition point, combustion time, maximum temperature, combustion type (maximum flame size, smoke color, smoke amount), or the like, which is an attribute related to ignition of the article.

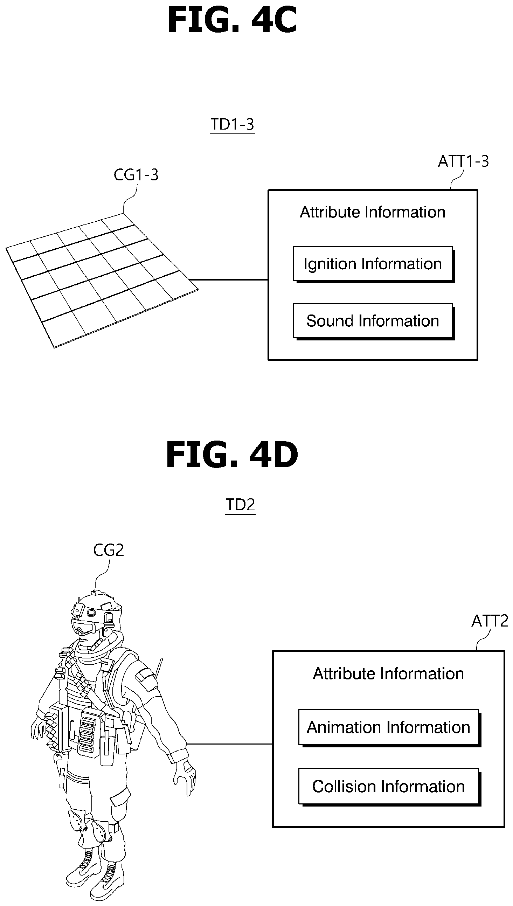

For example with reference to FIG. 4C, the floor template TD1-3 may include a changed graphic CG1-3 of a shape representing the floor, and attribute information ATT1-3 assigned to the corresponding changed graphic CG1-3. The attribute information ATT1-3 of the floor template TD1-3 may include ignition information and sound information. Here, the ignition information may include information about presence of combustion, ignition point, combustion time, maximum temperature, combustion type (maximum flame size, smoke color, smoke amount), or the like, which is an attribute related to ignition of the corresponding article. In addition, the sound information may include information about the sound type, sound size, or the like, which is an attribute related to a sound to be output when an avatar touches the corresponding floor.

The avatar template TD2 may include a template for an avatar that is placed on the map and whose behavior is controlled by a user wearing an XR training device.

For example with reference to FIG. 4D, the avatar template TD2 may include a changed graphic CG2 of a shape representing the avatar, and attribute information ATT2 assigned to the corresponding changed graphic CG2. The attribute information ATT2 of the avatar template TD2 may include animation information and collision information. Here, the animation information may include information (e.g., movement radius, movement angle) about movable parts of the avatar (e.g., arms and legs) when the avatar is moved in correspondence to actions of the user wearing an XR training device. In addition, the collision information may include information about the collision reference location, collision size, or the like.

The weapon template TD3 may include a template for a weapon (e.g., gun, knife) that an avatar may possess or carry.

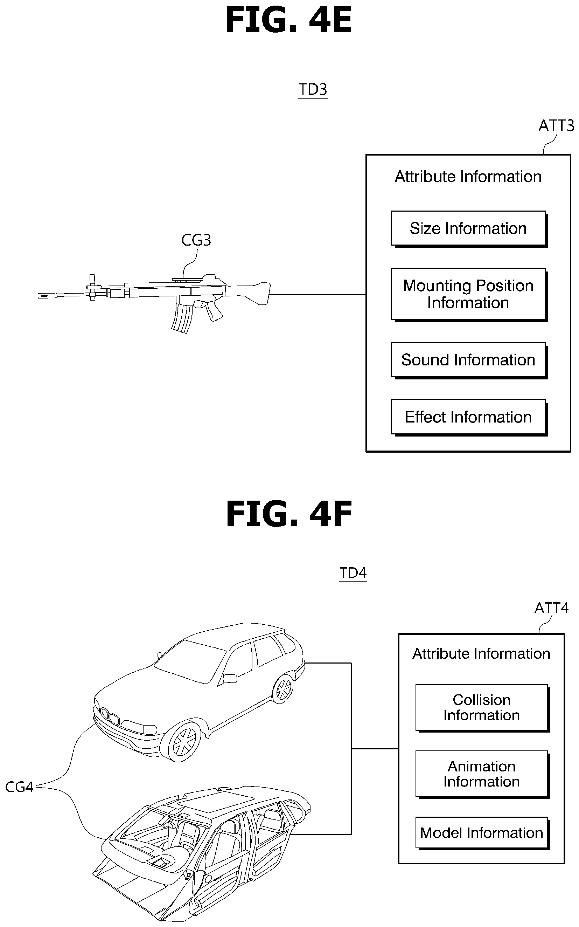

For example with reference to FIG. 4E, the weapon template TD3 may include a changed graphic CG3 of a shape representing the weapon, and attribute information ATT3 assigned to the changed graphic CG3. The attribute information ATT3 of the weapon template TD3 may include size information, mounting position information, sound information, effect information, or the like. The size information may include information about the size of the corresponding weapon. The mounting position information may include information about a place where the corresponding weapon is mounted in the avatar's socket. The sound information may include information about the sound type, the sound size, or the like, which is an attribute related to a sound generated when the avatar uses the corresponding weapon. The effect information may include application effect information, effect location information, or the like, which is an attribute related to the effect used in the corresponding weapon.

The transportation means template TD4 may include a template that is placed on the map and is about a means of transportation (e.g., car, motorcycle) that the avatar may ride.

For example with reference to FIG. 4F, the transportation means template TD4 may include a changed graphic CG4 of a shape representing a means of transportation, and attribute information ATT4 assigned to the corresponding changed graphic CG4. The attribute information ATT4 of the transportation means template TD4 may include collision information, animation information, model information, or the like. The collision information may include information about the collision reference location, collision size, or the like. The animation information may include information (e.g., movement radius, movement angle) about movable parts of a transportation means (e.g., arms and legs) when the avatar is moved in correspondence to actions of the user wearing an XR training device. The model information may include information about the external vehicle version, the number of passengers allowed on board, the position where the avatar sits, the type and location of installed switches, or the like, which is an attribute related to the model of the corresponding transportation means.

At this time, the template data TD may be customized and stored separately for each user. In other words, the template data TD may be stored separately according to nationality, performance of previous training, gender, purpose, and/or age of the registered user and/or the user participating in the training. For example, if a registered user and/or a user participating in training has a specific nationality, the template data TD used for XR training of the user may be modified based on data related to the user's native nationality and/or data related to a competing nationality that is in a competitive or hostile relationship with the native nationality. For example, the template data TD may be modified and stored on the basis of images regarding the native nationality (e.g., flags, firearms, military uniforms, building facades), images regarding the competing nationality (e.g., flags, firearms, military uniforms, building facades), and other data regarding the competing nationality (e.g., average physical data of soldiers, performance of firearms and weapons (e.g. fighter planes, tanks, etc.)). As another example, the template data TD used for XR training of a registered user may be modified based on the previous training performance of the registered user. For instance, if a user has achieved a specific level of performance or higher in the previous training, based on this, additional parameters (e.g., response speed, collision range adjustment, detection range expansion, cooperation through interaction with other objects) may be added and stored in the data of objects used for training of the user.

Referring back to FIG. 1, the preprocessor 100 may transfer the generated template data TD to the content producer 200 and the interaction part 300.

The content producer 200 is a tool that generates content (hereinafter referred to as "CT") used for XR training.

In some examples, the content producer 200 may generate content CT by using template data TD received from the preprocessor 100. In other words, when the preprocessor 00 converts a graphic resource GR into template data TD, the content producer 200 generates content CT for XR training by using the template data TD.

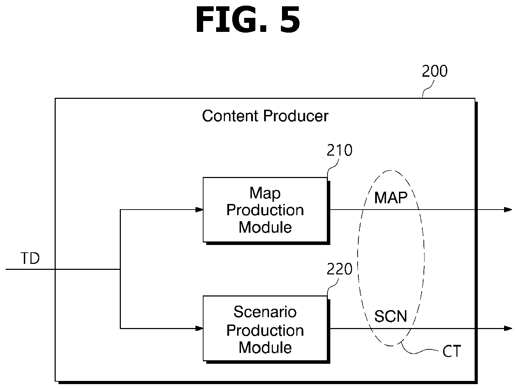

Next, with further reference to FIG. 5, the operation of the content producer 200 according to some embodiments of the present disclosure will be described.

FIG. 5 is a detailed block diagram of the content producer according to some embodiments of the present disclosure.

With reference to FIG. 5, the content producer 200 may include a map production module 210 and a scenario production module 220. The content producer 200 may output a map MAP generated by the map production module 210 and a scenario (hereinafter referred to as "SCN") generated by the scenario production module 220 as content CT.

The map production module 210 may generate a map MAP for XR training based on template data TD.

In some examples, the map production module 210 may generate a map MAP by arranging a plurality of template data TD in a predefined space. At this time, the generated map MAP may be implemented in three dimensions.

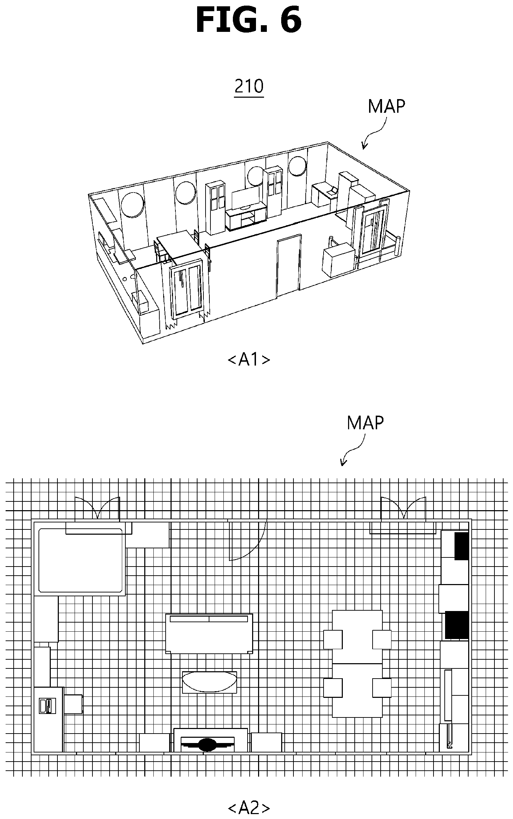

Next, the operation of the map production module 210 according to some embodiments of the present disclosure will be described with further reference to FIG. 6.

FIG. 6 illustrates a map produced by the map production module according to some embodiments of the present disclosure. Part <A1> of FIG. 6 shows an example of a map MAP generated in three dimensions, and part <A2> of FIG. 6 is a plan view of the generated map MAP in a two-dimensional form.

With reference to FIG. 6, the map production module 210 may generate a map MAP by arranging a plurality of template data TD in a predefined space.

In some examples, the map production module 210 may arrange object templates (see TD1 in FIGS. 3 to 4C) among the template data TD in a predefined space and determine the arrangement result as a map MAP. Here, the object templates may include a wall template, an article template, a floor template, or the like as described above, but embodiments of the present disclosure is not limited thereto. In other words, the map production module 210 may generate a map MAP by arranging a wall template, an article template, a floor template, or the like in a predefined space.

At this time, the map production module 210 may automatically correct the position of the template data TD to fit the map grid and place it. For example, the map production module 210 may place the template data TD in one of plural grids or may place the template data TD across plural grids.

Thereafter, the map production module 210 may change the attribute of each placed template data TD. At this time, the attributes of the template data TD may include the size (width, height) and direction of the template data, but embodiments of the present disclosure are not limited thereto.

The map created in this way later becomes a training space for avatars controlled by users wearing XR training devices. In other words, the users wearing XR training devices may perform XR training by moving or operating their respective avatars on the map.

Referring back to FIG. 5, the scenario production module 220 may generate a scenario (hereinafter referred to as "SCN") corresponding to the map MAP by using template data TD. At this time, the scenario SCN may refer to the entire process of conducting XR training.

In some examples, the scenario production module 220 may generate missions and events for XR training as a scenario (SCN).

At this time, a mission may mean an intermediate stage that should be taken to progress the scenario. Additionally, an event may refer to an individual incident that occurs during a scenario.

As an example, the scenario production module 220 may create at least one mission. At this time, missions included in the scenario may be not related to each other, or they may be related to each other so that a specific mission should be performed first to proceed with the next mission. That is, the missions included in the scenario may be configured in a time-series related manner, or may be configured independently in a parallel structure. When missions are configured in a parallel structure, individual missions may have independent occurrence conditions; multiple missions may occur simultaneously as long as the corresponding occurrence conditions are met, and the orders of execution of missions are not related. If a scenario includes a plurality of missions, the success of the scenario may be determined according to whether all the missions are successful.

As another example, the scenario production module 220 may generate at least one event. Events may refer to various phenomena that occur during XR training. For example, an event may mean any situation that occurs in a manner related or unrelated to the training process, such as appearance of a non-player character (NPC) or partial destruction of the map. At this time, the event may occur through an interaction between an avatar and the map MAP, or may occur independently of an interaction between an avatar and the map MAP. For classifying events, events may be classified as independent events or dependent events depending on whether they are dependent on a specific mission; alternatively, events may be classified as object events occurring through mutual relationships with objects or region events occurring in specific regions.

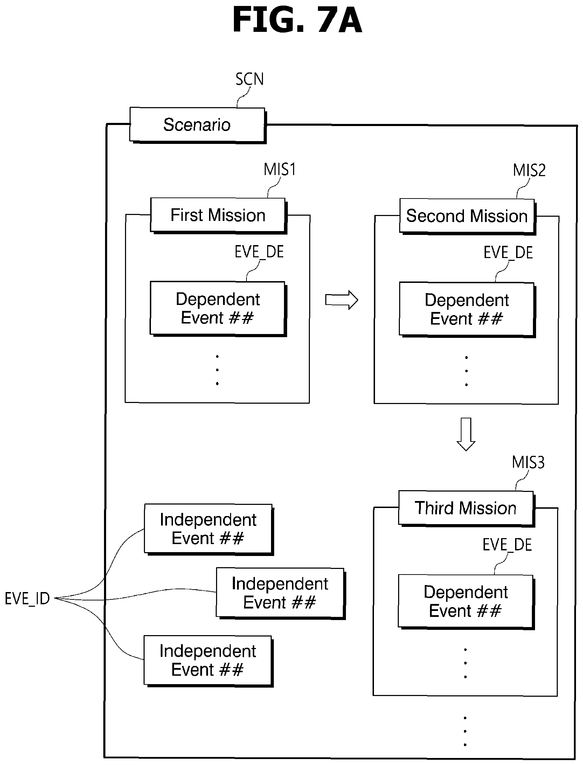

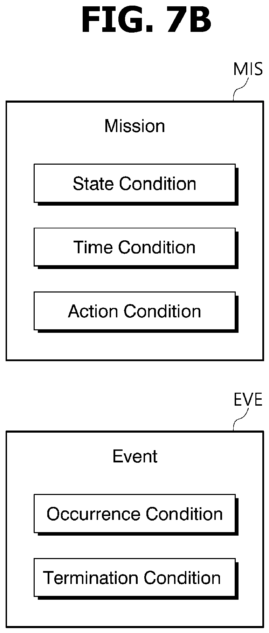

Next, a more detailed description will be given of missions and events included in a scenario SCN according to some embodiments of the present disclosure with reference to FIGS. 7A and 7B.

FIGS. 7A and 7B are diagrams for describing missions and events included in a scenario according to some embodiments of the present disclosure.

With reference to FIGS. 7A and 7B, a scenario SCN may include at least one mission (hereinafter referred to as "MIS") and at least one event (hereinafter referred to as "EVE").

A mission MIS may refer to an intermediate stage that should be taken to proceed with a scenario SCN.

Individual missions MIS1 to MIS3 included in the scenario SCN may be not related to each other, or they may be related to each other so that a specific mission should be performed first to proceed with the next mission. That is, the missions MIS1 to MIS3 included in the scenario SCN may be configured in a time-series related manner, or may be configured independently in a parallel structure. When the missions MIS1 to MIS3 are configured in a parallel structure, the individual missions MIS1 to MIS3 may have independent occurrence conditions; several missions may occur simultaneously as long as the corresponding occurrence conditions are met, and the orders of execution of the missions MIS1 to MIS3 are not related. If the scenario SCN includes plural missions MIS1 to MIS3, the success of the scenario may be determined according to whether all the missions MIS1 to MIS3 are successful.

A mission MIS may have one or more conditions. At this time, if all included conditions are met, the corresponding mission MIS may be determined to be successful. Here, the conditions may include a state condition, a time condition, and an action condition.

A state condition may refer to a condition regarding the state that should be achieved for the corresponding mission MIS to be determined to be successful. For example, state conditions may include a condition regarding the state of an avatar (e.g., physical strength), a condition regarding the state of an NPC present in the map, and a condition regarding the state of an object constituting the map (e.g., whether a structure is damaged).

A time condition may include a condition regarding the total time required to perform the corresponding mission MIS. In other words, the time condition may include a time limit required to complete the corresponding mission MIS, but embodiments of the present disclosure are not limited thereto.

An action condition may include a condition regarding an action that an avatar should perform before completing the corresponding mission MIS. In other words, each mission MIS may be determined to be successful only when the avatar has performed a specific action or operation corresponding to the action condition.

Here, each mission MIS can be determined to be successful only when all the configured conditions are satisfied. For example, in the case of a state condition, when a specific goal state is reached, it may be determined to be a success, and at the point when it becomes impossible to reach the goal state, it may be immediately determined to be a failure. Additionally, in the case of a time condition, when the goal is achieved within a time limit, it may be determined to be a success, and when the time limit is exceeded, it may be immediately determined to be a failure. In addition, an action condition may be determined to be a success when a given action is performed, and may be immediately determined to be a failure at the point when the given action becomes impossible to perform.

An event EVE may refer to an individual incident or phenomenon that occurs during a scenario SCN.

For example, an event EVE may refer to any situation that occurs in or without connection with the training process, such as appearance of an NPC or destruction of a portion of the map. At this time, the event may occur through an interaction between an avatar and the map MAP, or may occur independently of the interaction between an avatar and the map MAP.

As an example, events EVE may be divided into an independent event (hereinafter referred to as "EVE_ID") and a dependent event (hereinafter referred to as "EVE_DE") according to whether they are dependent on a specific mission MIS. In other words, an independent event EVE_ID may refer to a situation that occurs regardless of the progress of individual missions MIS1 to MIS3, and a dependent event EVE_DE may refer to any situation that is dependent on the missions MIS1 to MIS3 and occurs in the process of performing the missions MIS1 to MIS3.

At this time, the independent event EVE_ID and dependent event EVE_DE may each be further divided into an object event and a region event. In other words, the independent event EVE_ID may include at least one of an object event and a region event, and the dependent event EVE_DE may also include at least one of an object event and a region event. An object event may refer to a phenomenon set for a specific object (e.g., destruction or combustion of the specific object), and a region event may refer to a phenomenon set for a specific region (e.g., appearance of an NPC in the specific region).

An event EVE may have an occurrence condition and a termination condition.

The occurrence condition may refer to a condition for the corresponding event EVE to occur. The occurrence condition may be configured as various state values in a manner similar to a mission MIS. In other words, an event EVE may occur when a specific state (occurrence condition) set during XR training is satisfied. Occurrence conditions may include an occurrence condition related to time (e.g., burning of an object after expiry of a certain time), and an occurrence condition related to an avatar's behavior (e.g., appearance of a new NPC when the avatar enters a specific region), but embodiments of the present disclosure are not limited thereto.

The termination condition may refer to a condition for the corresponding event EVE to be terminated. In other words, an event EVE may be terminated when the state of an object or region in which the event EVE is set changes according to the termination condition. For example, the termination condition may include a series of processes that an avatar should perform in order to terminate the corresponding event EVE, but embodiments of the present disclosure are not limited thereto.

Referring back to FIG. 1, the content producer 200 may transfer the generated content CT to the interaction part 300. In other words, the content producer 200 may transfer the map and scenario to the interaction part 300.

The interaction part 300 may output XR training data (hereinafter referred to as "XRTD") based on template data TD, content CT, and a manipulation signal of a user (user signal, hereinafter referred to as "US").

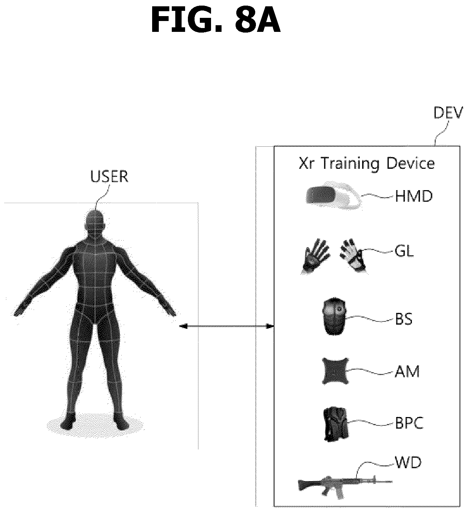

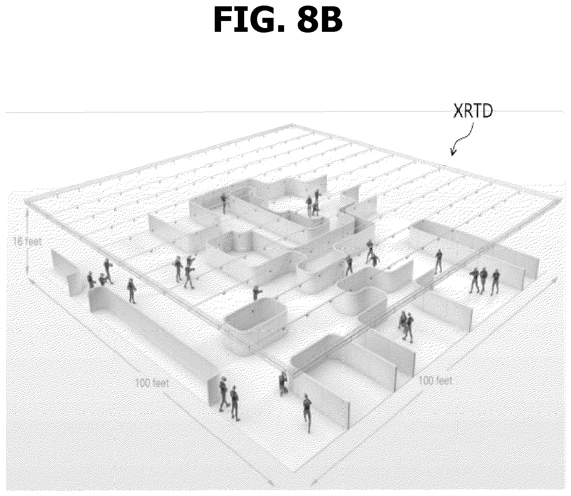

Next, a more detailed description will be given of the operation of the interaction part 300 according to some embodiments of the present disclosure with reference to FIGS. 8A and 8B.

FIG. 8A shows some examples of an XR training device, and FIG. 8B shows some examples of XR training data.

With reference to FIGS. 1, 8A and 8B, the interaction part 300 may output XR training data (hereinafter referred to as "XRTD") on the basis of template data TD, content CT, and a user manipulation signal US.

First, the interaction part 300 may include various XR training devices (hereinafter referred to as "DEV") that a user USER may gaze at or wear, and the interaction part 300 may receive a user manipulation signal US corresponding to the actual movement of the user USER through the corresponding XR training device DEV.

Here, the XR training device DEV may include a head mounted display (HMD), a glove (hereinafter referred to as "GL"), a body suit (hereinafter referred to as "BS"), an active marker (hereinafter referred to as "AM"), a backpack PC (hereinafter referred to as "BPC"), a weapon device (hereinafter referred to as "WD"), or the like.

The HMD may be used to track the user's location or display XR training data XRTD to the user. The glove GL may be used to track the movement of the user's fingers, or the like. The body suit BS may be used to physically transmit the impact on the simulation to the trainee. The active marker AM may include an active marker for a trainee (attached to the chest, back, wrist, or the like to track the trainee's motion) and an active marker for a weapon (tracking the location and muzzle direction of a weapon device). The backpack PC (BPC) may include a PC for running simulation software. The weapon device WD may include a device for conducting simulation.

Next, the interaction part 300 may apply a user manipulation signal US received through the corresponding XR training device DEV to the template data TD and content CT to generate and display XR training data XRTD.

To specifically describe the display process of XR training data XRTD,
a) First, when XR training begins, the interaction part 300 may display a map, avatars (self, ally, enemy), weapons, means of transportation, or the like on the user's HMD. At this time, the interaction part 300 may place an avatar corresponding to a specific user USER on the map according to the actual location of the user USER. Here, avatars, weapons, means of transportation, or the like placed on the map may have shapes based on the template data TD.
b) Next, the interaction part 300 may receive a user manipulation signal US from at least one user USER. That is, the interaction part 300 may receive the actual movement of the user USER as a user manipulation signal US through the XR training device DEV, and can modify the XR training data XRTD according to the received user manipulation signal US. In other words, the interaction part 300 may ensure that the actual movement of each user USER is reflected in the XR training data XRTD.
c) Next, the interaction part 300 may output a graphic object related to the scenario (missions, events) to the users USER, and may determine whether a user USER has performed the scenario based on the user manipulation signal US received from the corresponding user USER. In other words, the interaction part 300 may determine whether each user USER has successfully performed the scenario generated by the content producer 200 and output the result (e.g., mission success, mission failure, or the like).

While the inventive concept has been particularly shown and described with reference to exemplary embodiments thereof, it will be understood by those of ordinary skill in the art that various changes in form and details may be made therein without departing from the spirit and scope of the inventive concept as defined by the following claims. It is therefore desired that the embodiments be considered in all respects as illustrative and not restrictive, reference being made to the appended claims rather than the foregoing description to indicate the scope of the disclosure.

## Claims

1. An extended reality (XR) training server comprising:
a preprocessor configured to receive a graphic resource from an external database and convert the received graphic resource to generate template data;
a content producer configured to produce content for XR training by using the template data; and
an interaction part configured to display XR training data to a user by using the template data and the content,
wherein the template data includes data obtained from the graphic resource that is changed to be usable for generating the content,
wherein the content includes at least one of a map for XR training and a scenario corresponding to the map.

2. The XR training server of claim 1, wherein the preprocessor is configured to:
generate a changed graphic by performing at least one of standardization, format conversion, and size conversion on the graphic resource; and
generate the template data by assigning attribute information to the changed graphic.

3. The XR training server of claim 1 or 2, wherein the template data includes at least one of an object template related to an object constituting the map, an avatar template related to an avatar whose behavior is controlled by a user wearing an XR training device, a weapon template related to a weapon carried by the avatar, and a transportation means template related to a transportation means that is capable of carrying the avatar.

4. The XR training server of claim 3, wherein when generating at least one of the object template, the avatar template, the weapon template, and the transportation means template, the preprocessor is configured to assign, as the attribute information, at least one of collision information, ignition information, sound information, animation information, size information, mounting position information, effect information, model information, and boarding information.

5. The XR training server of any one of claims 1 to 4, wherein the content producer includes a map production module that generates the map by using the template data, and a scenario production module that generates the scenario by using the template data.

6. The XR training server of claim 5, wherein the map production module is configured to generate the map implemented in three dimensions by placing the template data in a predefined space.

7. The XR training server of claim 5, wherein the scenario production module is configured to generate, as the scenario, at least one mission that is performable by an avatar whose behavior is controlled by a user wearing an XR training device, and at least one event that occurs in the map.

8. The XR training server of claim 7, wherein:
the mission includes at least one of a state condition being a condition that the avatar has to achieve to complete the mission, a time condition, and an action condition;
the state condition includes a condition regarding a state of the avatar, a condition regarding a state of a non-player character (NPC) present in the map, and a condition regarding a state of an object constituting the map;
the time condition includes a condition regarding a total time required to perform the mission; and
the action condition includes a condition regarding an action that is to be performed by the avatar before completing the mission.

9. The XR training server of claim 7 or 8, wherein the event includes at least one of an occurrence condition for the event to occur and a termination condition for the event to terminate.

10. The XR training server of any one of claims 1 to 9, wherein the interaction part includes an XR training device that is wearable by a user and is configured to apply a user manipulation signal received through the XR training device to the template data and the content to reflect actual movement of the user in the XR training data.
